# FASCICULE DE BREVET EUROPEEN

(11) **EP 4 077 035 B1**
(45) Date de publication et mention de la délivrance du brevet: **02.09.2026**
(21) Numéro de dépôt: 20820461.0
(22) Date de dépôt: 14.12.2020
(51) Int. Cl.: B60L 53/20, H02J 7/02, H02M 1/10, H02M 1/12

(54) **SYSTÈME DE FILTRE HYBRIDE MONOPHASÉ ET TRIPHASÉ, POUR UN CHARGEUR ÉLECTRIQUE**
EIN- UND DREIPHASIGES HYBRID-FILTERSYSTEM FÜR EIN ELEKTRISCHES LADEGERÄT
SINGLE-PHASE AND THREE-PHASE HYBRID FILTER SYSTEM, FOR AN ELECTRIC CHARGER

(30) Priorité: 20.12.2019 FR 1915354
(43) Date de publication de la demande: 26.10.2022
(73) Titulaire: Valeo Electrification, 95800 Cergy (FR)
(72) Inventeur: FIORINA, Jean-Noel, 38590 SILLANS (FR); BENDANI, Larbi, 60110 MERU (FR)
(74) Mandataire: Valeo Powertrain Systems
(86) Numéro de dépôt international: PCT/EP2020/085969
(87) Numéro de publication internationale: WO 2021/122452

(56) Documents cités:
- EP-A1- 3 621 174
- CN-A- 101 192 791
- CN-A- 105 896 693
- CN-A- 110 233 514
- JP-A- 2007 300 700
- KR-A- 20190 024 051
- US-A1- 2014 268 933
- US-A1- 2016 121 740

## Description

### Domaine technique

La présente invention concerne le domaine des systèmes électriques, en particulier des chargeurs électriques, pour véhicule et vise plus précisément un système électrique équipé de cellules de filtrage « hybride » pour de tels chargeurs, ledit système électrique étant apte à fonctionner en mode de charge monophasé et en mode de charge triphasé.

### ETAT DE LA TECHNIQUE

Dans les systèmes électriques polyphasés connus, en particulier dans les chargeurs électriques pour véhicule électrique ou hybride, il est connu d'utiliser des filtres dédiés à chaque ligne, autrement dit à chaque phase ainsi qu'à la ligne neutre, pour filtrer les courants du mode différentiel et du mode commun.
US 2016/121740 A1, CN 110 233 514 A, CN 105 896 693 A et KR 2019 0024051 A divulguent des systèmes électriques assurant la fonction de chargeurs électriques ; US 2014/268933 et JP 2007 300700 A divulguent des circuits de filtration.

Par courant de mode différentiel, on entend notamment les courants d'ondulation correspondant aux bruits transportés sur les phases d'un système électrique polyphasé et rebouclant par le neutre.

Par courant de mode commun, on entend les courants parasites dus aux commutations des interrupteurs de puissance du système électrique et circulant entre les phases et la masse électrique ainsi qu'entre le neutre et la masse électrique du système électrique considéré.

Les courants de mode différentiel et les courants de mode commun correspondent à des perturbations hautes fréquences, notamment supérieures à 100 kHz, affectant les courants transférés par le système électrique.

Pour filtrer les courants de mode différentiel, on utilise des capacités dites capacités X connectées entre chaque phase et la ligne neutre et, pour filtrer les courants de mode commun, on utilise des capacités dites capacités Y, connectées entre chaque ligne et la masse, autrement dit, en général, le châssis de l'équipement électrique polyphasé.

Dans l'état de l'art, on utilise des filtres monophasés pour atténuer les courants de mode différentiel et les courants de mode commun, ligne par ligne.

Toutefois, cela présente différents inconvénients ayant un impact négatif sur l'efficacité du filtrage, en particulier en mode de charge monophasé.

La valeur totale de la capacité Y sur l'ensemble des lignes conditionne la valeur possible de l'intensité d'un courant de fuite parcourant le châssis, ledit courant de fuite étant ici un courant basse fréquence, autrement dit à la fréquence du réseau électrique externe, soit en général 50 Hz ou 60 Hz. Ce courant de fuite suscite un « courant de toucher », qui correspond au courant qui circulerait à travers le corps d'une personne touchant le châssis alors que le conducteur de protection serait coupé.

Ce courant de toucher est limité, c'est-à-dire qu'il doit pouvoir être garanti que ce courant de toucher ne sera jamais supérieur à un seuil maximal autorisé, pour des raisons de sécurité, ce qui limite de fait la valeur maximale possible pour la capacité Y totale, et donc a fortiori limite la valeur de chaque capacité Y du système électrique.

Selon l'art antérieur, on a par conséquent, dans un système électrique polyphasé, un filtre composé, au moins d'une capacité X et d'une capacité Y, adapté à « sa » ligne. Comme indiqué précédemment, la valeur de la capacité Y totale est limitée, pour des raisons de sécurité liées à la valeur maximale admissible pour le courant de toucher, de sorte que la capacité Y du filtre monophasé adapté à une ligne donnée est encore plus réduite, ce qui affecte sa capacité à atténuer le courant de mode commun correspondant. Ainsi, plus il y a de lignes, moins chaque filtre monophasé est efficace en raison du fait que la valeur de la capacité Y, distribuée sur l'ensemble des lignes, est respectivement réduite sur chacune des lignes.

Une solution à ce problème, dans l'état de la technique, consiste à augmenter la taille de l'inductance de chaque ligne. Mais l'inconvénient qui en découle réside dans l'encombrement du système électrique ainsi dimensionné.

Un autre inconvénient lié au fait d'avoir un filtre monophasé par ligne, en parallèle, dans l'état de l'art, réside dans le fait que cela oblige à conserver une marge de performance de chaque filtre individuel plus exigeante, afin de tenir la performance de filtrage globale requise pour le système électrique dans son ensemble. En effet, sur chaque ligne, en monophasé, des bruits existent et se cumulent. Ainsi, les limites de courant réinjectés vers le réseau électrique externe sont les mêmes pour les fonctionnements en monophasé et en triphasé, de sorte qu'en monophasé le courant réinjecté vers le réseau électrique externe est trois fois plus élevé qu'en triphasé. Par conséquent, classiquement, la marge de performance souhaitée pour chaque filtre monophasé, autrement dit pour chaque ligne, est de l'ordre de 10 dB.

Pour pallier au moins en partie les inconvénients précités, la solution proposée réside dans une structure de filtre hybride nativement polyphasé, avec des relais configurés pour permettre de régler le fonctionnement du filtre, soit en monophasé, soit en polyphasé (notamment en triphasé). Notamment, autrement dit, en lieu et place d'un système électrique comportant trois filtres monophasés en parallèle, l'invention propose un système électrique avec un filtre triphasé.

Selon l'invention, comme cela sera détaillé par la suite, une matrice d'interrupteurs est spécialement configurée pour permettre un fonctionnement optimisé du filtrage, que ce soit en alimentation monophasée ou en alimentation polyphasée, notamment triphasée. L'invention est ainsi particulièrement adaptée à un système électrique formant un chargeur électrique embarqué (ou « On-Board Charger » en anglais) pour un véhicule électrique ou hybride, ledit chargeur électrique étant apte à fonctionner, et donc à charger une batterie d'alimentation dudit véhicule électrique ou hybride, que ce soit à partir d'une source d'alimentation électrique externe monophasée ou triphasée.

### PRESENTATION DE L'INVENTION

Plus précisément, l'invention a pour objet un système électrique, notamment configuré pour assurer la fonction de chargeur électrique entre un réseau électrique externe et une batterie d'un véhicule électrique ou hybride, ledit système électrique comprenant au moins une cellule magnétique connectée à un réseau électrique externe et présentant un noyau magnétique et une pluralité de bobinages enroulés sur ledit noyau magnétique, ladite pluralité de bobinages formant au moins trois lignes dont une ligne neutre, les lignes non neutres étant désignés « les phases », dont une première phase est la phase alimentée lorsque le réseau électrique externe qui alimente le système électrique est monophasé, et dont toutes les phases sont alimentées lorsque le réseau électrique externe qui alimente le système électrique est polyphasé, et la ligne neutre étant désignée « le neutre », la cellule magnétique comprenant une cellule de filtrage, comprenant une capacité X de filtrage de courant de mode différentiel connectée entre chaque phase et le neutre, et une capacité Y de filtrage de courant de mode commun connectée entre chaque phase et une masse électrique du système électrique ainsi qu'entre le neutre et ladite masse électrique, ladite masse électrique étant notamment un châssis du système électrique. Ledit système électrique comprend une matrice d'interrupteurs connectée en amont des capacités X et Y de ladite cellule de filtrage de courant de mode différentiel et de courant de mode commun, ladite matrice d'interrupteurs comprenant un interrupteur en série sur chaque phase à l'exception de la première phase et un interrupteur connecté entre la première phase et chacune des autres phases, ladite matrice d'interrupteurs étant configurée de telle sorte que :
- dans un mode de fonctionnement monophasé, lorsque le réseau électrique externe qui alimente le système électrique est monophasé et alimente uniquement la première phase, les interrupteurs en série sur les phases non alimentées sont ouverts et les interrupteurs connectés entre la première phase et les autres phases sont fermés ;
- dans un mode de fonctionnement polyphasé, lorsque le réseau électrique externe qui alimente le système électrique est polyphasé et alimente toutes les phases, les interrupteurs en série sont fermés et les interrupteurs connectés entre la première phase et les autres phases sont ouverts.

Ainsi, toutes les phases du système électrique selon l'invention transmettent un courant en sortie et toutes les capacités X et Y sont concernées par le filtrage des courants de mode différentiel et de mode commun, y compris en monophasé.

Par conséquent, on augmente la valeur de la capacité Y totale en monophasé, tout en respectant les normes sur le courant de toucher ; par conséquent la taille individuelle des capacités Y peut être réduite.

Comme les capacités X sont placées après la matrice d'interrupteurs, toutes les capacités X participent au filtrage des ondulations de courant, ce qui permet de réduire le risque de surchauffe de ces capacités X.

Grâce à l'invention, il est ainsi possible de réduire la taille globale des inductances.

Selon un mode de réalisation, le système électrique selon l'invention comprend au moins deux cellules magnétiques successives en série, la matrice de d'interrupteurs se trouvant dans la dernière cellule magnétique, c'est-à-dire dans la cellule magnétique la plus éloignée du réseau électrique externe, toujours en amont des capa X et Y des cellules de filtrage de ladite dernière cellule magnétique.

Selon un mode de réalisation, la cellule de filtrage de courant de mode différentiel comprend aussi, sur chaque ligne, l'inductance de fuite correspondante de la pluralité de bobinages de la cellule magnétique, de façon à réaliser un filtre de type LC des courants de mode différentiel.

Selon un mode de réalisation, la cellule de filtrage de courant de mode commun comprend aussi, sur chaque ligne, l'inductance correspondante de la pluralité de bobinages de la cellule magnétique, de façon à réaliser un filtre de type LC des courants de mode commun.

Selon un mode de réalisation, la matrice d'interrupteurs est connectée entre la pluralité de bobinages de la cellule magnétique et les capacités X de la cellule de filtrage.

Notamment, le système électrique comprend une capacité X connectée en entrée du système électrique, entre chaque phase et le neutre, configurée de façon à réduire l'impédance d'entrée du système électrique.

Selon un mode de réalisation, la matrice d'interrupteurs est composée d'un nombre de relais égal au nombre de lignes.

Selon un mode de réalisation, le système électrique selon l'invention comprend exactement trois phases, soit une première phase, une deuxième phase et une troisième phase, adaptées à être alimentées en énergie électrique par un réseau externe triphasé, le système électrique présentant alors trois phases, dont la première phase, en plus du neutre, soit quatre lignes.

Selon un mode de réalisation, les bobinages de la ou des cellule(s) magnétique(s) sont configurés pour passer 48A de courant électrique via la première phase et le neutre et pour passer 16A de courant électrique sur les deuxième et troisième phases.

Selon un mode de réalisation, la matrice d'interrupteurs comprend un premier interrupteur connecté entre la première phase et la deuxième phase, un deuxième interrupteur connecté en série sur la deuxième phase, en entrée de la cellule magnétique ou de la cellule magnétique la plus éloignée de l'entrée du système électrique, un troisième interrupteur connecté en série sur la troisième phase, en entrée de la cellule magnétique ou de la cellule magnétique la plus éloignée de l'entrée du système électrique, et un quatrième interrupteur connecté entre la première phase et la troisième phase, dans lequel :
- en mode de fonctionnement monophasé, les premiers et quatrièmes interrupteurs sont fermés et les deuxième et troisième interrupteurs sont ouverts et,
- en mode de fonctionnement triphasé, les premiers et quatrièmes interrupteurs sont ouverts et les deuxième et troisième interrupteurs sont fermés.

Selon un mode de réalisation, la ou les cellules magnétiques comprennent un noyau magnétique et quatre bobinages formant respectivement les trois phases et le neutre, le bobinage formant la première phase, destinée à recevoir le courant du réseau électrique externe en mode de fonctionnement monophasé, étant diamétralement opposé au bobinage formant le neutre.

Notamment, le système électrique selon l'invention forme un chargeur électrique pour un véhicule électrique ou hybride.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig.1] est une représentation schématique d'un chargeur électrique triphasé selon l'état de l'art ;
[Fig.2] est une représentation schématique d'un exemple de système électrique selon l'invention, en mode de fonctionnement triphasé ;
[Fig.3] est une représentation schématique d'un exemple de système électrique selon l'invention, en mode de fonctionnement monophasé ;
[Fig.4] est un diagramme de performance du filtrage dans un exemple de système électrique selon l'invention.
Il faut noter que les figures exposent l'invention de manière détaillée pour permettre de mettre en œuvre l'invention, lesdites figures pouvant bien entendu servir à mieux définir l'invention le cas échéant.

### DESCRIPTION DETAILLEE DE L'INVENTION

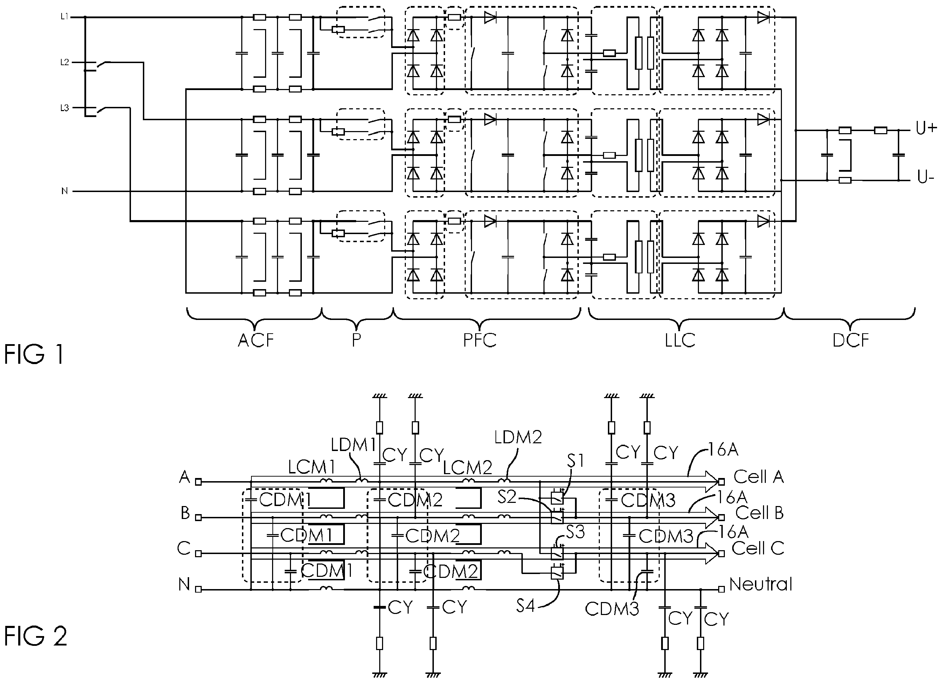

La [Fig.1] montre un système électrique, notamment un chargeur électrique apte à fonctionner en monophasé ou en triphasé. Autrement dit, le chargeur électrique représenté sur la [Fig.1] peut charger une batterie, notamment une batterie d'un véhicule électrique ou hybride connectée à la borne de sortie U+ / U-, à partir d'une énergie électrique fournie par un réseau électrique externe monophasé ou triphasé.

En monophasé, l'alimentation électrique externe fournit du courant sur la ligne L1 uniquement. Les relais connectés sur les entrées des lignes L2 et L3 sont ouverts. En triphasé, les trois lignes L1, L2, L3, autrement dit les trois phases du chargeur électrique triphasé représenté, sont alimentées en énergie électrique. Le système électrique présente également une ligne neutre N.

De manière classique, chaque phase L1, L2, L3 comprend un circuit de précharge P en amont d'un circuit convertisseur à correction de facteur de puissance PFC présentant trois phases en parallèle suivi de trois circuits convertisseurs de tension continus, par exemple de type LLC sans que cela soit une limitation, également en parallèles.

Des éléments de filtrage ACF sont connectés en entrée, pour traiter les courants alternatifs fournis à chaque phase L1, L2, L3 et des éléments de filtrage DCF sont connectés en sortie du chargeur électrique, pour traiter le courant continu délivré à la batterie.

Comme cela est connu, les circuits convertisseurs sont réalisés au moyen de bobinages enroulés autour d'un noyau magnétique respectif, formant des transformateurs commandés par des agencements de semi-conducteurs, notamment des interrupteurs, tels que des MOSFETs, pouvant être connectés de façon à former des ponts en H par exemple.

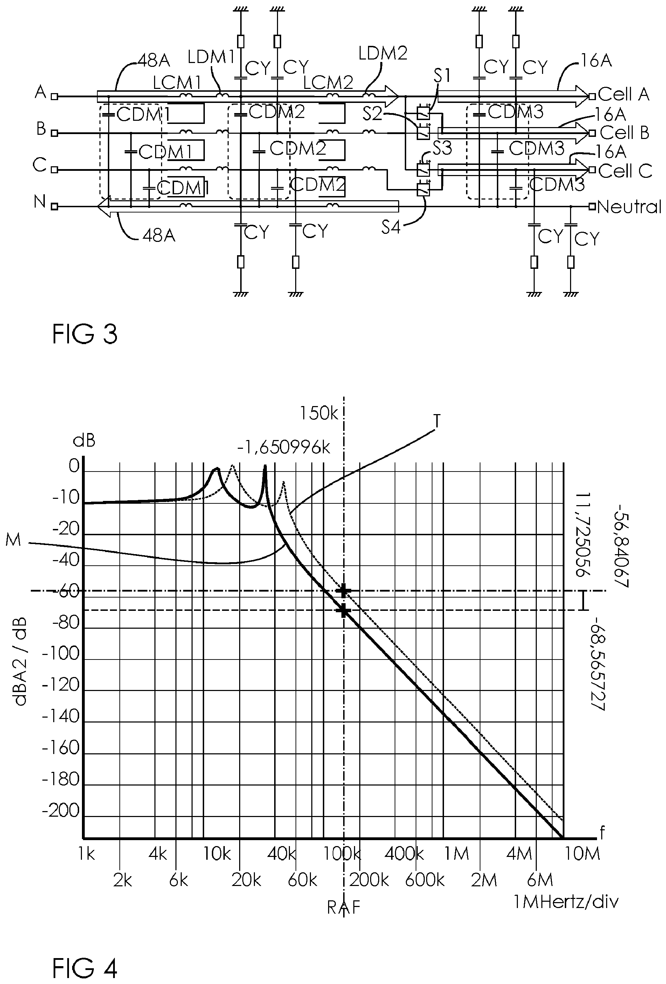

En référence aux figures 2 et 3, il est proposé une solution de filtrage dite hybride fonctionnant efficacement en monophasé comme en triphasé. Les capacités CDM1, CDM2, CDM3 sont des capacités X adaptées pour participer au filtrage des courants de mode différentiel et les capacités CY sont des capacités Y adaptées pour participer au filtrage des courants de mode commun.

Les capacités X CDM1, CDM2, CDM3 sont connectées entre chaque phase A, B, C et le neutre N.

Les capacités Y CY sont connectées entre chaque phase A, B, C et la masse électrique, correspondant ici au châssis du système électrique, ainsi qu'entre le neutre N et ladite masse électrique.

Des premières capacités X CDM1 sont connectées en entrée du système électrique, permettent de limiter l'impédance d'entrée du système électrique.

Le système électrique représenté sur les figures 2 et 3 comprend deux cellules magnétiques organisés autour d'un noyau magnétique respectif autour duquel son enroulés des bobinages correspondants aux quatre lignes du système, à savoir les trois phases A, B, C et le neutre. Ces trois phases A, B, C et ce neutre N sont connectés, en sortie du système électrique, à des bornes respectives Cell A, Cell B, Cell C et Neutral auxquelles peut se connecter un équipement électrique tiers, notamment un convertisseur DC/DC en vue de charger une batterie de véhicule électrique ou hybride

Les cellules magnétiques ont pour fonction de filtrer les perturbations de mode commun et de mode différentiel.

Selon le mode de réalisation représenté sur les figures 2 et 3, une matrice d'interrupteurs est prévue dans la deuxième cellule magnétique et est composée de quatre relais S1, S2, S3, S4. La première phase A correspond à la phase qui est alimentée en énergie électrique en mode monophasé. La première phase A ne comprend pas de relais de la matrice d'interrupteurs en série. En revanche, la première phase A est connectée à chacune des deux autres phases B, C par l'intermédiaire d'un relais respectif S1, S4. En outre, chacune desdites deux autres phases B, C comprend un relais respectif S2, S3 connecté en série en entrée du circuit convertisseur résonnant alimenté par la phase B, C correspondante.

Dans l'exemple représenté, le système électrique comprend deux cellules magnétiques. Toutefois, il peut y avoir davantage de cellules magnétiques en série. Dans tous les cas, la matrice d'interrupteurs est de préférence positionnée dans la dernière cellule, c'est-à-dire dans la cellule magnétique la plus éloigné de l'entrée du système électrique, connectée au réseau électrique externe. En pratique, de préférence, on prévoit un blindage entre les cellules magnétiques successives afin d'éviter que des perturbations électriques se propagent vers l'amont, notamment vers le réseau électrique externe.

La matrice d'interrupteurs S1, S2, S3, S4 est disposée, dans la cellule de filtrage de la dernière cellule magnétique, en amont des capacités X et Y de filtrage et en aval du noyau magnétique et des bobinages. En effet, en plaçant la matrice d'interrupteurs en aval des capacités X et Y, on risquerait d'augmenter le bruit sur les lignes, voire de susciter des courts-circuits, en haute fréquence, via les couplages entre les pistes conductrices, et de transférer notamment des perturbations provenant par exemple d'un convertisseur de puissance connecté en sortie du système électrique, vers le réseau électrique externe.

La matrice d'interrupteurs est donc disposée entre le noyau magnétique de la dernière cellule magnétique, autour duquel sont enroulés des bobinages, autrement la dernière « self », et les capacités X et Y de la cellule de filtrage associée à cette dernière cellule magnétique.

Selon ce mode de réalisation, dans chaque cellule de filtrage, c'est-à-dire pour chaque phase, les capacités Y CY réalisent, avec l'inductance LCM1, LCM2 de la cellule magnétique, un circuit de type LC pour filtrer les courants de mode commun.

D'un autre côté, les capacités X CDM1, CDM2, CDM3 réalisent, avec l'inductance de fuite LDM1, LDM2 de la cellule magnétique, un circuit de type LC pour filtrer les courants de mode différentiel. Bien que l'exploitation de l'inductance de fuite de la cellule magnétique soit préférée, il est possible, alternativement, de prévoir des inductances LDM1, LDM2 spécifiques connectées en série sur chaque phase A, B, C.

Ainsi, pour une ligne, une cellule de filtrage est en pratique composée de la self associée aux capacités X et aux capacités Y connectée à cette ligne.

### Modes de fonctionnement

Le système électrique selon l'invention, notamment décrit précédemment dans un contexte de chargeur électrique monophasé et triphasé, présente un mode de fonctionnement monophasé et un mode de fonctionnement triphasé. En particulier, dans l'exemple où le système électrique est un chargeur électrique monophasé et triphasé, le système électrique selon l'invention présente un mode de fonctionnement monophasé et un mode de fonctionnement triphasé. Grâce à son architecture, notamment grâce à la matrice d'interrupteurs et à son positionnement judicieux, le système électrique selon l'invention permet de filtrer, autrement dit d'atténuer, efficacement les courants de fuite différentiels et les courants de mode commun, avec un dimensionnement et un encombrement réduit et en respectant les exigences de sécurité.

Le mode de fonctionnement triphasé correspond, dans le cas d'un chargeur électrique, à un mode où un réseau électrique externe triphasé fournit un courant électrique sur les trois phases A, B, C en vue de charger une batterie, notamment une batterie de véhicule électrique ou hybride, après conversion du courant électrique triphasé via les cellules magnétiques du chargeur électrique. Par exemple, chaque phase A, B, C conduit alors un courant d'environ 16 A. En mode de fonctionnement triphasé, il n'y a en effet pas de courant dans le neutre puisque la somme des trois courants circulant sur les phases est nulle.

Selon l'invention, dans ce contexte, en référence à la [Fig.2], les relais S2, S3 de la matrice d'interrupteurs sont fermés et donc passants, c'est-à-dire qu'ils conduisent le courant électrique ou encore qu'ils sont à l'état ON. Les autres relais S1, S4 sont ouverts.

Ainsi, naturellement, les cellules de filtrage de chaque phase sont mises à contribution.

La présente invention est particulièrement avantageuse en mode de fonctionnement monophasé. Ici, dans le cas d'un chargeur électrique, un réseau électrique externe monophasé fournit un courant électrique sur la première phase A uniquement, toujours en vue de charger une batterie, notamment une batterie de véhicule électrique ou hybride, après conversion du courant électrique triphasé via les cellules magnétiques du chargeur électrique. Dans cet exemple, en regard du mode de fonctionnement triphasé, la première phase A conduit alors un courant d'environ 48 A. En mode de fonctionnement monophasé, aucun courant électrique n'est injecté depuis le réseau électrique externe sur les autres phases (distinctes de la première phase) B, C.

Selon l'invention, dans ce contexte, en référence à la [Fig.3], les relais S1, S4 de la matrice d'interrupteurs sont fermés et donc passants, c'est-à-dire qu'ils conduisent le courant électrique ou encore qu'ils sont à l'état ON. Les autres relais S2, S3 sont ouverts.

Ainsi, la matrice d'interrupteurs est commandée de sorte à distribuer le courant électrique sur trois bornes de sortie Cell A, Cell B, Cell C du système électrique, par exemple pour alimenter un convertisseur de puissance en vue de charger une batterie d'un véhicule électrique ou hybride. Dans le même temps, le courant électrique traverse les cellules de filtrage des trois phases A, B, C. Ainsi, en référence à la [Fig.3], quatre capacités Y CY sont mises à contribution au niveau de la dernière cellule magnétique pour atténuer les courants de mode commun. De la sorte, on augmente fortement le nombre de capacités Y sollicitées pour le filtrage des courants de mode commun en fonctionnement monophasé. En conséquence, le respect du courant de toucher, qui est fonction de la valeur de la capacité Y total du système électrique est plus aisée à tenir pour des performances de filtrage équivalente. En effet, comme davantage de capacités Y sont sollicitées, on peut choisir des capacités Y de valeur plus faible que dans l'état de l'art pour obtenir un même niveau d'atténuation des courants de mode commun, voire un niveau supérieur.

Même en mode de fonctionnement monophasé, l'ensemble des capacités Y CY participent donc à la création de courant de fuite en cas de déconnexion du neutre, de sorte que le courant de toucher reste bien inférieur au seuil souhaité, notamment par exemple au seuil de 2,5 mA.

Il en va de même pour les capacités X. Ainsi, toujours en référence à la [Fig.3], deux capacités X CDM3 supplémentaires sont mises à contribution par rapport à un système de l'art antérieur qui ne solliciterait pas les capacités X CDM3 connectés entre les phases B, C distinctes de la première phase A et le neutre N. Les ondulations de courant sont ainsi plus facilement atténuées.

Un autre avantage qui découle de l'invention réside dans le fait que, comme indiqué précédemment, la self, autrement dit les bobinages enroulés autour d'un noyau magnétique pour former les cellules magnétiques, participent à la réalisation du filtrage en réalisant, avec les capités X et Y, respectivement un circuit LC. Ainsi, la souplesse obtenue sur la valeur des capacités X et Y, grâce à l'invention, permet aussi de réduire la taille des bobinages et donc l'encombrement du système électrique.

Ainsi, grâce à l'invention, la matrice d'interrupteurs est positionnée de telle sorte qu'elle permet, en monophasé, d'augmenter le nombre de capacité X, Y impliquées tout en respectant la limite de courant de toucher et en permettant d'obtenir un système électrique moins encombrant.

Par exemple, toujours dans le contexte d'un chargeur électrique monophasé et triphasé pour charger une batterie électrique de véhicule électrique ou hybride, la présente invention permet de choisir une capacité Y ayant une valeur de 6,2 nF par ligne, contre 4,1nF par ligne dans l'art antérieur, tout en garantissant un courant de toucher inférieur à 2,5 mA. L'inductance de chaque bobinage de la cellule magnétique peut être égale à 5 mH, contre égale ou supérieure à 20 mH dans l'art antérieur.

Le positionnement de la matrice d'interrupteurs dans la dernière cellule magnétique pour l'éloigner de l'entrée du système électrique permet d'éviter des phénomènes de couplage électro-magnétique entre les relais S1, S2, S3, S4 et les bornes d'entrée du système électrique.

En outre, en référence à la [Fig.4], on a représenté la performance de filtrage, du point de vue de l'atténuation, en fonction de la fréquence f, en fonctionnement monophasé M et en fonctionnement triphasé T avec, en mode triphasé, 3,5 kW de puissance électrique transférée par phase A, B, C, et, en mode monophasé, 11 kW de puissance électrique transférée après avoir été injectée sur la première phase L1. Comme on peut le voir, la performance en monde monophasé est améliorée d'environ 10 dB.

### Mode de réalisation de la self

S'agissant de la réalisation des cellules magnétiques, on précise que, selon un mode de réalisation préféré, lors de l'agencement des bobinages autour du noyau magnétique, on s'assurera d'éloigner au maximum le bobinage destiné à former la première phase vis-à-vis du neutre. Autrement dit, sur un noyau magnétique en forme d'anneau, l'enroulement du bobinage correspondant à la première phase et celui correspondant au neutre seront disposés l'un en face de l'autre ; autrement dit, ils seront diamétralement opposés par rapport à l'anneau du noyau magnétique. De la sorte, en mode de fonctionnement monophasé, on maximise l'inductance de fuite qui participe à la réalisation du filtrage, comme expliqué précédemment, en formant un circuit LC, notamment, avec les capacités Y ou avec les capacités X. En maximisant l'inductance de fuite en mode de fonctionnement monophasé, on améliore directement la performance de filtrage dans ce mode de fonctionnement sans altérer la performance de filtrage en mode de fonctionne triphasé.

## Revendications

1. Système électrique, notamment configuré pour assurer la fonction de chargeur électrique entre un réseau électrique externe et une batterie d'un véhicule électrique ou hybride, ledit système électrique comprenant au moins une cellule magnétique connectable à un réseau électrique externe et présentant un noyau magnétique et une pluralité de bobinages enroulés sur ledit noyau magnétique, ladite pluralité de bobinages formant au moins trois lignes (A, B, C, N) dont une ligne neutre (N), les lignes non neutres (A, B, C) étant désignés « les phases », dont une première phase (A) est la phase alimentée lorsque le réseau électrique externe qui alimente le système électrique est monophasé, et dont toutes les phases (A, B, C) sont alimentées lorsque le réseau électrique externe qui alimente le système électrique est polyphasé, et la ligne neutre étant désignée « le neutre », la cellule magnétique comprenant :
une cellule de filtrage, comprenant une capacité X (CDM1, CDM2, CDM3) de filtrage de courant de mode différentiel connectée entre chaque phase (A, B, C) et le neutre (N), et une capacité Y (CY) de filtrage de courant de mode commun connectable entre chaque phase (A, B, C) et une masse électrique du système électrique ainsi qu'entre le neutre (N) et ladite masse électrique, ladite masse électrique étant notamment un châssis du système électrique ;
ledit système électrique comprenant une matrice d'interrupteurs connectée en amont des capacités X (CDM1, CDM2, CDM3) et Y (CY) de ladite cellule de filtrage de courant de mode différentiel et de courant de mode commun, ladite matrice d'interrupteurs comprenant un interrupteur en série (S2, S3) sur chaque phase (B, C) à l'exception de la première phase (A) et un interrupteur connecté entre la première phase (A) et chacune des autres phases (B, C), ladite matrice d'interrupteurs étant configurée de telle sorte que :
- en monophasé, lorsque le réseau électrique externe qui alimente le système électrique est monophasé et alimente uniquement la première phase (A), les interrupteurs en série (S2, S3) sur les phases non alimentées (B, C) sont ouverts et les interrupteurs (S1, S4) connectés entre la première phase (A) et les autres phases (B, C) sont fermés ;
- dans un mode de fonctionnement polyphasé, lorsque le réseau électrique externe qui alimente le système électrique est polyphasé et alimente toutes les phases (A, B, C), les interrupteurs en série (S2, S3) sont fermés et les interrupteurs (S1, S4) connectés entre la première phase (A) et les autres phases (B, C) sont ouverts.

2. Système électrique selon la revendication 1, comprenant au moins deux cellules magnétiques successives en série, la matrice d'interrupteurs (S1, S2, S3, S4) se trouvant dans la dernière cellule magnétique, c'est-à-dire dans la cellule magnétique la plus éloignée du réseau électrique externe, toujours en amont des capa X et Y des cellules de filtrage de ladite dernière cellule magnétique.

3. Système électrique selon la revendication 1 ou 2, dans lequel la cellule de filtrage de courant de mode différentiel comprend aussi, sur chaque ligne, l'inductance de fuite correspondante (LDM2) de la pluralité de bobinages de la cellule magnétique, de façon à réaliser un filtre de type LC des courants de mode différentiel.

4. Système électrique selon l'une des revendications 1 à 3, dans lequel la cellule de filtrage de courant de mode commun comprend aussi, sur chaque ligne, l'inductance correspondante (LCM2) de la pluralité de bobinages de la cellule magnétique, de façon à réaliser un filtre de type LC des courants de mode commun.

5. Système électrique selon l'une des revendications 1 à 4, dans lequel la matrice d'interrupteurs (S1, S2, S3, S4) est connectée entre la pluralité de bobinages de la cellule magnétique et les capacités X (CDM3) de la cellule de filtrage.

6. Système électrique selon l'une des revendications 1 à 5, comprenant une capacité X (CDM1) connectée en entrée du système électrique, entre chaque phase (A, B, C) et le neutre (N), configurée de façon à réduire l'impédance d'entrée du système électrique.

7. Système électrique selon l'une des revendications 1 à 6, dans lequel la matrice d'interrupteurs (S1, S2, S3, S4) est composée d'un nombre de relais égal au nombre de lignes.

8. Système électrique selon l'une des revendications 1 à 7, comprenant exactement trois phases (A, B, C), soit une première phase (A), une deuxième phase (B) et une troisième phase (C), adaptées à être alimentées en énergie électrique par un réseau externe triphasé, le système électrique présentant alors trois phases (A, B, C), dont la première phase (A), en plus du neutre (N), soit quatre lignes.

9. Système électrique selon la revendication 8, dans lequel les bobinages de la ou des cellule(s) magnétique(s) sont configurés pour passer 48A de courant électrique via la première phase (A) et le neutre (N) et pour passer 16A de courant électrique sur les deuxième et troisième phases (B, C).

10. Système électrique selon la revendication 8 ou 9, dans lequel la matrice d'interrupteurs (S1, S2, S3, S4) comprend un premier interrupteur (S1) connecté entre la première phase (A) et la deuxième phase (B), un deuxième interrupteur (S2) connecté en série sur la deuxième phase (B), en entrée de la cellule magnétique ou de la cellule magnétique la plus éloignée de l'entrée du système électrique, un troisième interrupteur (S3) connecté en série sur la troisième phase (C), en entrée de la cellule magnétique ou de la cellule magnétique la plus éloignée de l'entrée du système électrique, et un quatrième interrupteur (S4) connecté entre la première phase (A) et la troisième phase (C), dans lequel :
- en mode de fonctionnement monophasé, les premiers et quatrièmes interrupteurs (S1, S4) sont fermés et les deuxième et troisième interrupteurs (S2, S3) sont ouverts et,
- en mode de fonctionnement triphasé, les premiers et quatrièmes interrupteurs (S1, S4) sont ouverts et les deuxième et troisième interrupteurs (S2, S3) sont fermés.

11. Système électrique selon l'une des revendications 8 à 10, dans lequel la ou les cellules magnétiques comprennent un noyau magnétique et quatre bobinages formant respectivement les trois phases (A, B, C) et le neutre (N), le bobinage formant la première phase (A), destinée à recevoir le courant du réseau électrique externe en mode de fonctionnement monophasé, étant diamétralement opposé au bobinage formant le neutre (N).

12. Système électrique selon l'une des revendications précédentes, dans lequel formant un chargeur électrique pour un véhicule électrique ou hybride.

## Patentansprüche

1. Elektrisches System, das insbesondere dafür konfiguriert ist, die Funktion eines elektrischen Ladegeräts zwischen einem externen Stromnetz und einer Batterie eines Elektrooder Hybridfahrzeugs zu erfüllen, wobei das besagte elektrische System mindestens eine magnetische Zelle umfasst, die an ein externes Stromnetz anschließbar ist und einen Magnetkern und eine Vielzahl von auf den besagten Magnetkern gewickelten Wicklungen aufweist, wobei die besagte Vielzahl von Wicklungen mindestens drei Leitungen (A, B, C, N) einschließlich einer neutralen Leitung (N) bildet, wobei die nicht-neutralen Leitungen (A, B, C) als "die Phasen" bezeichnet werden, von denen eine erste Phase (A) die gespeiste Phase ist, wenn das das elektrische System speisende externe Stromnetz einphasig ist, und von denen alle Phasen (A, B, C) gespeist werden, wenn das das elektrische System speisende externe Stromnetz mehrphasig ist, und wobei die neutrale Leitung als "der Neutralleiter" bezeichnet wird, wobei die magnetische Zelle Folgendes umfasst:
- eine Filterzelle, umfassend einen X-Kondensator (CDM1, CDM2, CDM3) zur Filterung von Gegentaktströmen, der zwischen jeder Phase (A, B, C) und dem Neutralleiter (N) angeschlossen ist, und einen Y-Kondensator (CY) zur Filterung von Gleichtaktströmen, der zwischen jeder Phase (A, B, C) und einer elektrischen Masse des elektrischen Systems sowie zwischen dem Neutralleiter (N) und der besagten elektrischen Masse anschließbar ist, wobei die besagte elektrische Masse insbesondere ein Chassis des elektrischen Systems ist;
- wobei das besagte elektrische System eine Schaltermatrix umfasst, die den X-Kondensatoren (CDM1, CDM2, CDM3) und Y-Kondensatoren (CY) der besagten Filterzelle für Gegentaktstrom und Gleichtaktstrom vorgeschaltet ist, wobei die besagte Schaltermatrix einen Reihenschalter (S2, S3) auf jeder Phase (B, C) mit Ausnahme der ersten Phase (A) und einen Schalter, der zwischen der ersten Phase (A) und jeder der anderen Phasen (B, C) angeschlossen ist, umfasst, wobei die besagte Schaltermatrix derart konfiguriert ist, dass:
- im Einphasenbetrieb, wenn das das elektrische System speisende externe Stromnetz einphasig ist und nur die erste Phase (A) speist, die Reihenschalter (S2, S3) auf den nicht gespeisten Phasen (B, C) geöffnet sind und die zwischen der ersten Phase (A) und den anderen Phasen (B, C) angeschlossenen Schalter (S1, S4) geschlossen sind;
- in einem mehrphasigen Betriebsmodus, wenn das das elektrische System speisende externe Stromnetz mehrphasig ist und alle Phasen (A, B, C) speist, die Reihenschalter (S2, S3) geschlossen sind und die zwischen der ersten Phase (A) und den anderen Phasen (B, C) angeschlossenen Schalter (S1, S4) geöffnet sind.

2. Elektrisches System nach Anspruch 1, umfassend mindestens zwei aufeinanderfolgende magnetische Zellen in Reihe, wobei sich die Schaltermatrix (S1, S2, S3, S4) in der letzten magnetischen Zelle befindet, d. h. in der am weitesten vom externen Stromnetz entfernten magnetischen Zelle, immer vorgeschaltet den X- und Y-Kondensatoren der Filterzellen der besagten letzten magnetischen Zelle.

3. Elektrisches System nach Anspruch 1 oder 2, wobei die Filterzelle für Gegentaktströme auf jeder Leitung auch die entsprechende Streuinduktivität (LDM2) der Vielzahl von Wicklungen der magnetischen Zelle umfasst, um so ein LC-Filter für Gegentaktströme zu bilden.

4. Elektrisches System nach einem der Ansprüche 1 bis 3, wobei die Filterzelle für Gleichtaktströme auf jeder Leitung auch die entsprechende Induktivität (LCM2) der Vielzahl von Wicklungen der magnetischen Zelle umfasst, um so ein LC-Filter für Gleichtaktströme zu bilden.

5. Elektrisches System nach einem der Ansprüche 1 bis 4, wobei die Schaltermatrix (S1, S2, S3, S4) zwischen der Vielzahl von Wicklungen der magnetischen Zelle und den X-Kondensatoren (CDM3) der Filterzelle angeschlossen ist.

6. Elektrisches System nach einem der Ansprüche 1 bis 5, umfassend einen X-Kondensator (CDM1), der am Eingang des elektrischen Systems zwischen jeder Phase (A, B, C) und dem Neutralleiter (N) angeschlossen und so konfiguriert ist, dass er die Eingangsimpedanz des elektrischen Systems verringert.

7. Elektrisches System nach einem der Ansprüche 1 bis 6, wobei die Schaltermatrix (S1, S2, S3, S4) aus einer Anzahl von Relais besteht, die gleich der Anzahl der Leitungen ist.

8. Elektrisches System nach einem der Ansprüche 1 bis 7, umfassend genau drei Phasen (A, B, C), nämlich eine erste Phase (A), eine zweite Phase (B) und eine dritte Phase (C), die dazu eingerichtet sind, von einem externen dreiphasigen Netz mit elektrischer Energie versorgt zu werden, wobei das elektrische System dann drei Phasen (A, B, C), darunter die erste Phase (A), zusätzlich zum Neutralleiter (N), d. h. vier Leitungen, aufweist.

9. Elektrisches System nach Anspruch 8, wobei die Wicklungen der magnetischen Zelle(n) so konfiguriert sind, dass sie 48 A elektrischen Strom über die erste Phase (A) und den Neutralleiter (N) leiten und 16 A elektrischen Strom über die zweite und dritte Phase (B, C) leiten.

10. Elektrisches System nach Anspruch 8 oder 9, wobei die Schaltermatrix (S1, S2, S3, S4) einen ersten Schalter (S1), der zwischen der ersten Phase (A) und der zweiten Phase (B) angeschlossen ist, einen zweiten Schalter (S2), der am Eingang der magnetischen Zelle oder der am weitesten vom Eingang des elektrischen Systems entfernten magnetischen Zelle auf der zweiten Phase (B) in Reihe angeschlossen ist, einen dritten Schalter (S3), der am Eingang der magnetischen Zelle oder der am weitesten vom Eingang des elektrischen Systems entfernten magnetischen Zelle auf der dritten Phase (C) in Reihe angeschlossen ist, und einen vierten Schalter (S4), der zwischen der ersten Phase (A) und der dritten Phase (C) angeschlossen ist, umfasst, wobei:
- im einphasigen Betriebsmodus der erste und vierte Schalter (S1, S4) geschlossen sind und der zweite und dritte Schalter (S2, S3) geöffnet sind und,
- im dreiphasigen Betriebsmodus der erste und vierte Schalter (S1, S4) geöffnet sind und der zweite und dritte Schalter (S2, S3) geschlossen sind.

11. Elektrisches System nach einem der Ansprüche 8 bis 10, wobei die magnetische(n) Zelle(n) einen Magnetkern und vier Wicklungen umfassen, die jeweils die drei Phasen (A, B, C) und den Neutralleiter (N) bilden, wobei die Wicklung, die die erste Phase (A) bildet und dazu bestimmt ist, im einphasigen Betriebsmodus den Strom aus dem externen Stromnetz aufzunehmen, der Wicklung, die den Neutralleiter (N) bildet, diametral gegenüberliegt.

12. Elektrisches System nach einem der vorhergehenden Ansprüche, wobei es ein elektrisches Ladegerät für ein Elektro- oder Hybridfahrzeug bildet.

## Claims

1. An electrical system, notably configured to perform the function of an electrical charger between an external electrical network and a battery of an electric or hybrid vehicle, said electrical system comprising at least one magnetic cell connectable to an external electrical network and presenting a magnetic core and a plurality of windings wound on said magnetic core, said plurality of windings forming at least three lines (A, B, C, N) including one neutral line (N), the non-neutral lines (A, B, C) being designated "the phases", of which a first phase (A) is the energized phase when the external electrical network supplying the electrical system is single-phase, and of which all phases (A, B, C) are energized when the external electrical network supplying the electrical system is polyphase, and the neutral line being designated "the neutral", the magnetic cell comprising:
- a filtering cell, comprising an X capacitor (CDM1, CDM2, CDM3) for filtering differential mode current connected between each phase (A, B, C) and the neutral (N), and a Y capacitor (CY) for filtering common mode current connectable between each phase (A, B, C) and an electrical ground of the electrical system as well as between the neutral (N) and said electrical ground, said electrical ground being notably a chassis of the electrical system;
- said electrical system comprising a switch matrix connected upstream of the X capacitors (CDM1, CDM2, CDM3) and Y capacitors (CY) of said differential mode current and common mode current filtering cell, said switch matrix comprising a series switch (S2, S3) on each phase (B, C) with the exception of the first phase (A) and a switch connected between the first phase (A) and each of the other phases (B, C), said switch matrix being configured such that:
- in single-phase mode, when the external electrical network supplying the electrical system is single-phase and supplies only the first phase (A), the series switches (S2, S3) on the nonsupplied phases (B, C) are open and the switches (S1, S4) connected between the first phase (A) and the other phases (B, C) are closed;
- in a polyphase operating mode, when the external electrical network supplying the electrical system is polyphase and supplies all the phases (A, B, C), the series switches (S2, S3) are closed and the switches (S1, S4) connected between the first phase (A) and the other phases (B, C) are open.

2. The electrical system according to claim 1, comprising at least two successive magnetic cells in series, the switch matrix (S1, S2, S3, S4) being located in the last magnetic cell, that is to say in the magnetic cell furthest from the external electrical network, always upstream of the X and Y capacitors of the filtering cells of said last magnetic cell.

3. The electrical system according to claim 1 or 2, wherein the differential mode current filtering cell also comprises, on each line, the corresponding leakage inductance (LDM2) of the plurality of windings of the magnetic cell, so as to form an LC-type filter for differential mode currents.

4. The electrical system according to one of claims 1 to 3, wherein the common mode current filtering cell also comprises, on each line, the corresponding inductance (LCM2) of the plurality of windings of the magnetic cell, so as to form an LC-type filter for common mode currents.

5. The electrical system according to one of claims 1 to 4, wherein the switch matrix (S1, S2, S3, S4) is connected between the plurality of windings of the magnetic cell and the X capacitors (CDM3) of the filtering cell.

6. The electrical system according to one of claims 1 to 5, comprising an X capacitor (CDM1) connected at the input of the electrical system, between each phase (A, B, C) and the neutral (N), configured so as to reduce the input impedance of the electrical system.

7. The electrical system according to one of claims 1 to 6, wherein the switch matrix (S1, S2, S3, S4) is composed of a number of relays equal to the number of lines.

8. The electrical system according to one of claims 1 to 7, comprising exactly three phases (A, B, C), namely a first phase (A), a second phase (B) and a third phase (C), adapted to be supplied with electrical energy by an external three-phase network, the electrical system then presenting three phases (A, B, C), including the first phase (A), in addition to the neutral (N), i.e., four lines.

9. The electrical system according to claim 8, wherein the windings of the magnetic cell(s) are configured to pass 48A of electrical current via the first phase (A) and the neutral (N) and to pass 16A of electrical current on the second and third phases (B, C).

10. The electrical system according to claim 8 or 9, wherein the switch matrix (S1, S2, S3, S4) comprises a first switch (S1) connected between the first phase (A) and the second phase (B), a second switch (S2) connected in series on the second phase (B), at the input of the magnetic cell or of the magnetic cell furthest from the input of the electrical system, a third switch (S3) connected in series on the third phase (C), at the input of the magnetic cell or of the magnetic cell furthest from the input of the electrical system, and a fourth switch (S4) connected between the first phase (A) and the third phase (C), wherein:
- in single-phase operating mode, the first and fourth switches (S1, S4) are closed and the second and third switches (S2, S3) are open and,
- in three-phase operating mode, the first and fourth switches (S1, S4) are open and the second and third switches (S2, S3) are closed.

11. The electrical system according to one of claims 8 to 10, wherein the magnetic cell(s) comprise a magnetic core and four windings respectively forming the three phases (A, B, C) and the neutral (N), the winding forming the first phase (A), intended to receive the current from the external electrical network in single-phase operating mode, being diametrically opposed to the winding forming the neutral (N).

12. The electrical system according to one of the preceding claims, wherein it forms an electrical charger for an electric or hybrid vehicle.
